Europäisches Patentamt

European Patent Office

Office européen des brevets

(19)

(11)  **EP 1 727 268 A2**

(12)  **EUROPÄISCHE PATENTANMELDUNG**

(43) Veröffentlichungstag:
     29.11.2006  Patentblatt 2006/48

(51) Int Cl.:
     *H02P 1/00* (2006.01)     *H02P 9/00* (2006.01)

(21) Anmeldenummer: 06009491.9

(22) Anmeldetag: 09.05.2006

(84) Benannte Vertragsstaaten:
     AT BE BG CH CY CZ DE DK EE ES FI FR GB GR
     HU IE IS IT LI LT LU LV MC NL PL PT RO SE SI
     SK TR
     Benannte Erstreckungsstaaten:
     AL BA HR MK YU

(30) Priorität: 27.05.2005  DE 102005025894

(71) Anmelder: ebm-papst St. Georgen GmbH & Co. KG
     78112 St. Georgen (DE)

(72) Erfinder: Hahn, Alexander
     88605 Sauldorf (Ortsteil Boll) (DE)

(74) Vertreter: Raible, Tobias
     Raible & Raible
     Schoderstrasse 10
     70192 Stuttgart (DE)

(54)  **Verfahren zum Betreiben eines elektronisch kommutierten Motors, und Motor zur Durchführung eines solchen Verfahrens**

(57)  Bei diesem Verfahren wird ein temperaturabhängiger Motorparameter (ke) eines elektronisch kommutierten Motors (124) während des Betriebs sensorlos bestimmt. Der Motor hat einen Stator (201) mit Statorsträngen (202, 204, 206) und einen mit diesem Stator zusammenwirkenden permanentmagnetischen Rotor (208), welcher im Betrieb in den Statorsträngen Spannungen ($U_{IND}$) induziert, wobei den Statorsträngen eine Endstufe (122) zur Steuerung ihrer Bestromung zugeordnet ist. Bei diesem Verfahren wird - bei sich drehendem Rotor (208) - die Bestromung der Statorstränge unterbrochen. Ein eine induzierte Spannung charakterisierender Wert ($U_{IND}$) und ein die Drehzahl des Motors charakterisierender Wert ($\omega$) werden ermittelt. Unter Zuhilfenahme dieser Werte wird der temperaturabhängige Motorparameter (ke) ermittelt. Die Erfindung betrifft auch einen Motor zur Durchführung eines solchen Verfahrens. Das Verfahren erfordert keinen Temperatursensor und kann in ein "embedded program" integriert werden.

Fig. 1

EP 1 727 268 A2

**Beschreibung**

Die Erfindung betrifft ein Verfahren und eine Anordnung zum Betrieb eines elektronisch kommutierten Motors (ECM), der einen permanentmagnetischen Rotor hat.

Wenn ein solcher ECM bei verschiedenen Temperaturen mit demselben konstanten Strom arbeitet, ändert sich - abhängig von der Temperatur des Rotormagneten - das vom Motor erzeugte Drehmoment. Hierbei sind abhängig vom Temperaturbereich, in dem der Motor arbeiten muss, in Abhängigkeit von der Magnettemperatur Änderungen des Drehmoments bis zu 44 % möglich, d.h. dass bei einem konstanten Motorstrom das erzeugte Drehmoment bei einer Magnettemperatur von +180° C um 44 % kleiner ist als bei einer Magnettemperatur von - 40° C. Um derartig großen Änderungen des Drehmoments entgegen zu wirken, ist eine geeignete Temperaturkompensation zweckmäßig. Hierzu muss die augenblickliche Temperatur des Rotormagneten - direkt oder indirekt - bekannt sein, um in Abhängigkeit von ihr das Drehmoment entsprechend anzupassen.

Es ist deshalb eine Aufgabe der Erfindung, ein neues Verfahren zum Betrieb eines elektronisch kommutierten Motors, und einen Motor zur Durchführung eines solchen Verfahrens, bereit zu stellen.

Diese Aufgabe wird gelöst durch ein Verfahren nach Anspruch 1. Der Erfindung liegt die Erkenntnis zugrunde, dass eine direkte Messung der Magnettemperatur besonders bei kleineren Motoren zu teuer wäre, da man hierzu einen speziellen Temperatursensor benötigt, welcher den Bereich der im Betrieb vorkommenden Magnettemperaturen abdeckt und der über eine elektrische Verbindung innerhalb des Motors mit einer entsprechenden elektronischen Vorrichtung verbunden sein muss. Die Erfindung geht deshalb von der Überlegung aus, dass die Magnettemperatur eines elektronisch kommutierten Motors unter Verwendung eines Motorparameters ermittelt wird, dessen Wert sich abhängig von der Magnettemperatur ändert. Aus dem Wert dieses Parameters kann man dann auf die Magnettemperatur zurück schließen, so dass man keine direkte Messung der Magnettemperatur (mittels eines Temperatursensors) benötigt. Die Erfindung ist nicht auf einen bestimmten Motorentyp beschränkt, sondern eignet sich für viele Bauarten von Motoren, z.B. Motoren mit einem Statorwicklungsstrang, zwei Strängen, drei Strängen etc., und einer beliebigen Zahl von Rotorpolen. Sie eignet sich ebenso für Innenläufermotoren wie für Außenläufermotoren.

Beim Verfahren nach Anspruch 1 wird die Energiezufuhr zu den Statorsträngen des ECM kurzzeitig unterbrochen. Nach Abklingen des Motorstroms, d.h. wenn der Motor im Wesentlichen stromlos geworden ist und der Rotor sich weiterhin dreht, wird ein Spannungswert für die Spannung ermittelt, welche durch den Rotormagneten in wenigstens einem Statorstrang induziert wird. Ferner wird bei Bedarf ein Wert ermittelt, welcher für die Drehzahl des Motors kennzeichnend ist. Das kann z.B. die Drehzahl selbst sein, oder die Zeit, die der Rotor für das Durchlaufen eines vorgegebenen Drehwinkels benötigt, oder bei einem drehzahlgeregelten Motor der dem Drehzahlregler vorgegebene Drehzahl-Sollwert. Aus diesem ermittelten Spannungswert und dem Drehzahlwert kann man dann auf die Temperatur des Rotormagneten schließen und einen entsprechenden Zahlenwert erhalten, sofern dieser bei der Rechnung überhaupt notwendig ist.

Somit kann man auf eine direkte Messung der Magnettemperatur mittels eines speziellen Temperaturmessgliedes verzichten. Die Bestimmung des temperaturabhängigen Motorparameters erfolgt während des Betriebs des ECM, z.B. in vorgegebenen zeitlichen Abständen, je nach der Art des Antriebs.

Eine bevorzugte Weiterbildung des erfindungsgemäßen Verfahrens ist Gegenstand des Anspruchs 6. Dementsprechend wird der Motorstrom des ECM in Abhängigkeit von der ermittelten Magnettemperatur beeinflusst. Dies ermöglicht es, das vom Motor erzeugte Drehmoment unabhängig von der Magnettemperatur im Wesentlichen konstant zu halten, und dies gilt auch bei Serienschwankungen innerhalb einer Serie von Motoren, denn innerhalb einer Serie können durch Schwankungen beim Fabrikationsprozess Magnete mit unterschiedlichen magnetischen Eigenschaften verwendet werden, und auch diese Schwankungen können mit Hilfe der Erfindung sozusagen "weggeregelt" werden, so dass der Käufer ein uniformes Produkt erhält, bei dem gewisse Motorwerte garantiert werden können. Dies ist z.B. dann wichtig, wenn ein solcher Motor dazu verwendet wird, den Schieber eines Ventils anzutreiben, so dass dieses Ventil mit einem Drehmoment geschlossen werden kann, das unabhängig von der Umgebungstemperatur ist. Dies ist besonders in arktischen Gebieten von großem Vorteil. Jedoch kann auch - abhängig von der Temperatur - ein bestimmter Verlauf des Drehmoments abhängig von der Temperatur vorgegeben werden.

Eine besonders bevorzugte Weiterbildung der Erfindung ist Gegenstand des Anspruchs 7. Bei einem ECM mit drei Statorsträngen, also einem so genannten dreiphasigen Motor, verwendet man häufig als Endstufe eine Vollbrückenschaltung.

Diese hat drei Halbleiter-Serienschaltungen mit jeweils einem oberen und einem unteren Halbleiterschalter. Für die Messung werden die Halbleiterschalter der Endstufe so gesteuert, dass die Energiezufuhr zum Motor unterbrochen wird. Anschließend, wenn der Motorstrom abgeklungen ist, wird ein erster unterer Halbleiterschalter einer ersten Serienschaltung, welche mit einem ersten Wicklungsanschluss verbunden ist, leitend geschaltet, und an einem zweiten Wicklungsanschluss, welcher über einen Statorstrang mit dem ersten Wicklungsanschluss verbunden ist, wird die in diesem Statorstrang induzierte Spannung erfasst.

Falls benötigt, kann der zugehörige Drehzahlwert sehr einfach unter Verwendung von Rotorstellungssignalen eines Rotorstellungssensors ermittelt werden, der diesem Motor zugeordnet ist.

Somit kann ein erfindungsgemäßes Verfahren mit einfachen und in gängigen ECMs zumindest teilweise bereits vorhandenen Bauteilen durchgeführt werden. Dies ermöglicht eine kostengünstige Realisierung.

Eine weitere bevorzugte Weiterbildung ist Gegenstand des Anspruchs 30. Hierbei wird als temperaturabhängiger Motorparameter die so genannte Motorkonstante ke, oder ein zu ihr proportionaler Wert, bestimmt, welcher die Spannung beschreibt, die in einem Statorstrang des Motors bei einer bestimmten Normdrehzahl induziert wird. Mit steigender Magnettemperatur des Rotormagneten sinkt der Wert dieser Motorkonstanten. Somit kann aus ihrem Wert unmittelbar auf die Magnettemperatur geschlossen werden, und aus ihrem Wert kann man auch auf Abweichungen eines Motors vom Durchschnitt einer Motorserie schließen und diese Abweichungen dann elektronisch kompensieren.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen, sowie aus den übrigen Unteransprüchen. Es zeigt:

Fig. 1    ein Blockdiagramm einer Vorrichtung zur Bestimmung eines temperaturabhängigen Motorparameters für einen ECM gemäß der Erfindung,

Fig. 2    ein Schaltbild einer Vorrichtung zur Bestimmung eines temperaturabhängigen Motorparameters für einen ECM gemäß einer Ausführungsform der Erfindung,

Fig. 3    ein Schaltbild einer Signalaufbereitungseinrichtung für ein Steuersignal für einen unteren Halbleiterschalter in einer Endstufe gemäß einer Ausführungsform der Erfindung,

Fig. 4    ein Schaltbild einer Signalaufbereitungseinrichtung für ein Steuersignal für einen oberen Halbleiterschalter in einer Endstufe gemäß einer Ausführungsform der Erfindung,

Fig. 5    ein Schaltbild einer Signalaufbereitungseinrichtung für eine in einen Statorstrang induzierte Spannung gemäß einer Ausführungsform der Erfindung,

Fig. 6    ein vereinfachtes Schaltbild eines Messgliedes zur Messung einer in einen Statorstrang induzierten Spannung gemäß einer Ausführungsform der Erfindung,

Fig. 7    ein Oszillogramm einer während einer Messperiode in einem Statorstrang induzierten Spannung bei einer Ausführungsform der Erfindung,

Fig. 8    ein Oszillogramm mit einer während mehreren aufeinander folgenden Messperioden in einem Statorstrang induzierten Spannung bei einer Ausführungsform der Erfindung,

Fig. 9    ein Flussdiagramm eines erfindungsgemäßen Verfahrens zur Bestimmung eines temperaturabhängigen Motorparameters gemäß einer Ausführungsform der Erfindung,

Fig. 10    ein Flussdiagramm, welches die Erfassung der induzierten Spannung bei der in Fig. 11 dargestellten Anordnung zeigt,

Fig. 11    eine vereinfachte Schaltung zur Erfassung der Spannung, welche durch die Drehung des Rotors 208 im Statorstrang 206 induziert wird, während der Motor stromlos ist,

Fig. 12    ein Schaubild, welches den Zusammenhang zwischen der Drehzahl omega ($\omega$) und der induzierten Spannung $U_{IND}$ bei einem bestimmten Motor und einer bestimmten Motortemperatur zeigt,

Fig. 13    ein Schaubild analog Fig. 12, welches den Zusammenhang zwischen Drehzahl und induzierter Spannung für denselben Motor bei den Temperaturen -20° C, +20° C und +60° C zeigt; man sieht, dass mit zunehmender Motortemperatur bei einer vorgegebenen Drehzahl die induzierte Spannung abnimmt,

Fig. 14    ein Diagramm, welches den Zusammenhang zwischen Motorstrom I und Drehmoment T für denselben Motor, aber bei unterschiedlichen Temperaturen, zeigt, und

Fig. 15    ein Flussdiagramm, welches dafür ausgelegt ist, einen bestimmten Motor durch elektronische Maßnahmen in die Lage zu versetzen, unabhängig von der Motortemperatur für einen vorgegebenen Motorstrom $I_s$ ein Drehmoment vorgegebener Größe zu erzeugen.

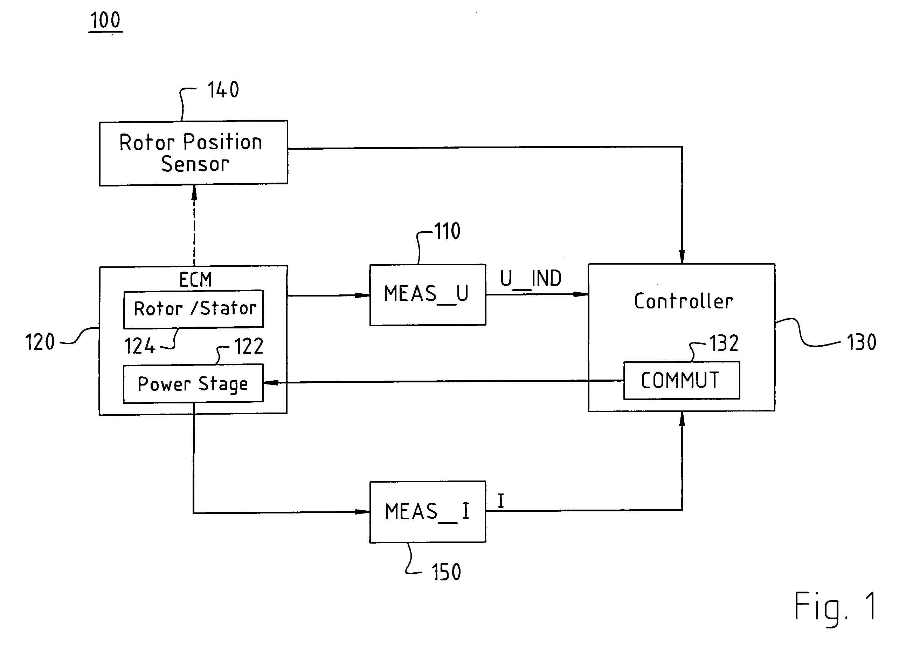

**Fig. 1** zeigt ein Blockdiagramm, welches die prinzipielle Funktionsweise einer Vorrichtung 100 zum Betrieb eines ECM 120 gemäß der vorliegenden Erfindung illustriert. Die Vorrichtung 100 ist zur Ermittlung eines temperaturabhängigen Motorparameters des ECM 120 ausgebildet, welcher zur Bestimmung der Magnettemperatur des ECM 120 verwendet werden kann. In Abhängigkeit von der Magnettemperatur kann das Drehmoment des ECM 120 geregelt werden, um aufgrund von Variationen in der Magnettemperatur auftretende Drehmomentschwankungen zu kompensieren.

Gemäß einer Ausführungsform der vorliegenden Erfindung umfasst die Vorrichtung 100 einen ECM 120 mit einer Rotor-Stator-Anordnung 124 mit einem Rotor und mindestens einem Statorstrang. Dem ECM 120 ist eine Endstufe 122 zur Beeinflussung des Motorstroms in dem mindestens einen Statorstrang zugeordnet. Die Vorrichtung 100 umfasst eine Steuerung 130 (Controller), welche mit dem ECM 120 verbunden ist. Die Steuerung 130 umfasst eine Kommutierungssteuerung 132 (COMMUT) und ist eingangsseitig mit mindestens einem Rotorstellungssensor 140 (Rotor Position Sensor) verbunden, welcher dem ECM 120 zugeordnet ist. Die Kommutierungssteuerung 132 erzeugt Kommutierungssignale für die Endstufe 122 (Driver Stage) des ECM 120 in Abhängigkeit von Rotorstellungssignalen, welche von dem Rotorstellungssensor 140 erzeugt werden. Die Endstufe 122 ist ausgangsseitig über ein Strommessglied 150 (MEAS_ I) zur Messung des Motorstroms mit der Steuerung 130 verbunden. Eingangsseitig ist die Steuerung 130 mit einem Spannungsmessglied 110 (MEAS_U) zur Messung einer in dem mindestens einen Statorstrang induzierten Spannung verbunden. In bevorzugter Weise ist die Steuerung 130 dazu ausgebildet, die von der Kommutierungssteuerung 132 bereit gestellten Kommutierungssignale für die Endstufe 122 des ECM 120 abhängig von der Magnettemperatur des Rotors der Anordnung 124 zu beeinflussen.

Im Betrieb der Vorrichtung 100 wird dem mindestens einen Statorstrang der Anordnung 124 des ECM 120 eine Versorgungsspannung zugeführt, welche der ECM 120 in Drehungen des Rotors mit einer bestimmten Drehzahl umsetzt. Hierbei werden die durch den mindestens einen Statorstrang fließenden Ströme durch Kommutierungssignale von der Kommutierungssteuerung 132 gesteuert.

Zur Bestimmung des temperaturabhängigen Motorparameters wird die Endstufe 122 ausgeschaltet, damit der mindestens eine Statorstrang der Anordnung 124 in den stromlosen Zustand übergeht, da die in dem Statorstrang induzierte Spannung nur im stromlosen Zustand messbar ist. Wie in Fig. 1 dargestellt, kann hierbei der Motorstrom I nach dem Ausschalten der Endstufe 122 mit dem Strommessglied 150 gemessen werden, um den Zeitpunkt des Übergangs in den stromlosen Zustand zu bestimmen.

Nach dem Erreichen des stromlosen Zustands wird von der Steuerung 130 in einer vorgegebenen Messperiode ein Drehzahlwert $\omega$ bestimmt. Wie in Fig. 1 dargestellt, kann der Drehzahlwert w unter Verwendung von Signalen des Rotorstellungssensors 140 ermittelt werden. Hierbei wird z.B. zur Bestimmung des Drehzahlwerts w die Zeitdauer gemessen, die der Rotor des ECM 120 benötigt, um sich von einer ersten zu einer zweiten Position zu drehen, wobei die erste und die zweite Position über das Signal des Sensors 140 bestimmt werden können. Ferner können erste und zweite Position bei einem Wechsel des Rotorstellungssignals bestimmt werden.

Von dem Spannungsmessglied 110 wird der Steuerung 130 in der Messperiode mindestens ein Spannungswert $U_{IND}$ für die in dem Statorstrang induzierte Spannung zugeführt. Bevorzugt beginnt eine Messperiode bei einem Wechsel des Signals vom Rotorstellungssensor 140.

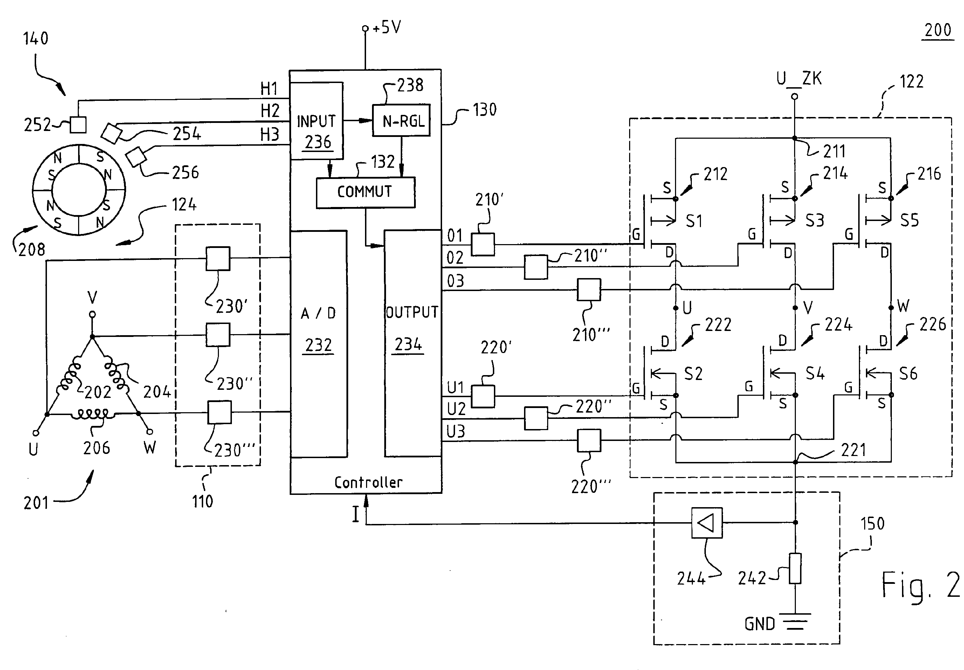

Aus dem mindestens einen Spannungswert $U_{IND}$ und dem Drehzahlwert $\omega$ bestimmt die Steuerung 130 den temperaturabhängigen Motorparameter. Die Funktionsweise der Vorrichtung 100 zur Bestimmung des temperaturabhängigen Motorparameters wird bei Fig. 2 näher beschrieben.

Der temperaturabhängige Motorparameter ermöglicht einen direkten Rückschluss auf die Magnettemperatur im ECM 120. Er wird ermittelt, während sich der ECM 120 dreht.

**Fig. 2** zeigt ein vereinfachtes Schaltbild einer Schaltung 200 zur Bestimmung eines temperaturabhängigen Motorparameters, mit welcher die Vorrichtung 100 zum Betrieb des ECM 120 aus Fig. 1 gemäß einer ersten Ausführungsform realisiert wird. Diese Schaltung umfasst eine Vielzahl von Bauelementen, welche die Anordnung 124 und die Endstufe 122 des ECM 120, den mindestens einen Rotorstellungssensor 140, die Steuerung 130 mit der Kommutierungssteuerung 132, das Strommessglied 150 und das Spannungsmessglied 110 ausbilden.

Die Anordnung 124 des ECM 120 ist hier schematisch durch einen Rotor 208 und einen Stator 201 dargestellt. Der Rotor 208 ist beispielhaft als permanentmagnetischer Rotor mit vier Magnetpolen dargestellt. Alternativ kann der Rotor 208 durch Zuführung von Strom erregt werden, so dass auf Permanentmagnete verzichtet werden kann. Der Stator 201 ist beispielhaft mit drei Strängen 202, 204, 206 dargestellt, die gemäß Fig. 2 im Dreieck geschaltet sind. Ebenso wäre eine Sternschaltung, eine separate Ansteuerung jedes Strangs, oder auch eine andere Strangzahl möglich. Den Strängen 202, 204 bzw. 206 ist jeweils ein Anschluss U, V bzw. W zugeordnet, über den sie mit der Endstufe 122 verbunden sind.

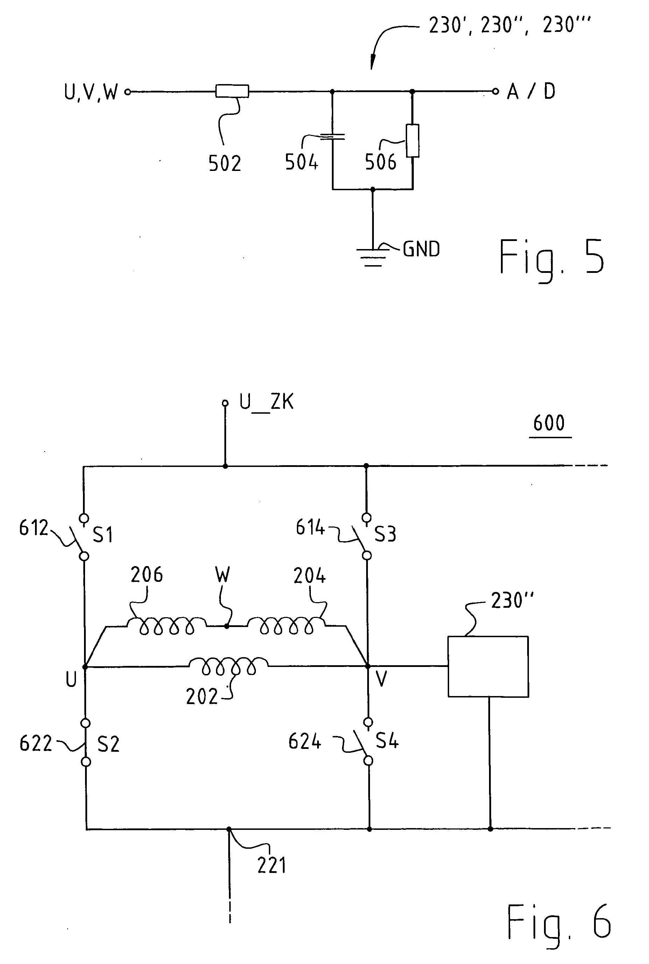

Jeder der Anschlüsse U, V, W der Statorstränge 202, 204 und 206 ist über eine zugeordnete Signalaufbereitungseinrichtung 230', 230" bzw. 230''' mit einem A/D-Wandler 232 (A/D) der Steuerung 130 verbunden. Die Signalaufbereitungseinrichtungen 230', 230" und 230''' bilden das Spannungsmessglied 110 und werden bei Fig. 5 beschrieben.

Der Anschluss U des Strangs 202 ist mit einem ersten oberen Halbleiterschalter 212 (S1) und einem ersten unteren Halbleiterschalter 222 (S2) der Endstufe 122 verbunden, welche eine erste Halbleiter-Serienschaltung bilden. Der Anschluss V des Strangs 204 ist mit einem zweiten oberen Halbleiterschalter 214 (S3) und einem zweiten unteren Halbleiterschalter 224 (S4) der Endstufe 122 verbunden, welche eine zweite Serienschaltung bilden. Der Anschluss W des Strangs 206 ist mit einem dritten oberen Halbleiterschalter 216 (S5) und einem dritten unteren Halbleiterschalter 226 (S6) der Endstufe 122 verbunden, welche eine dritte Serienschaltung bilden. Erste, zweite und dritte Serienschaltung bilden die Endstufe 122.

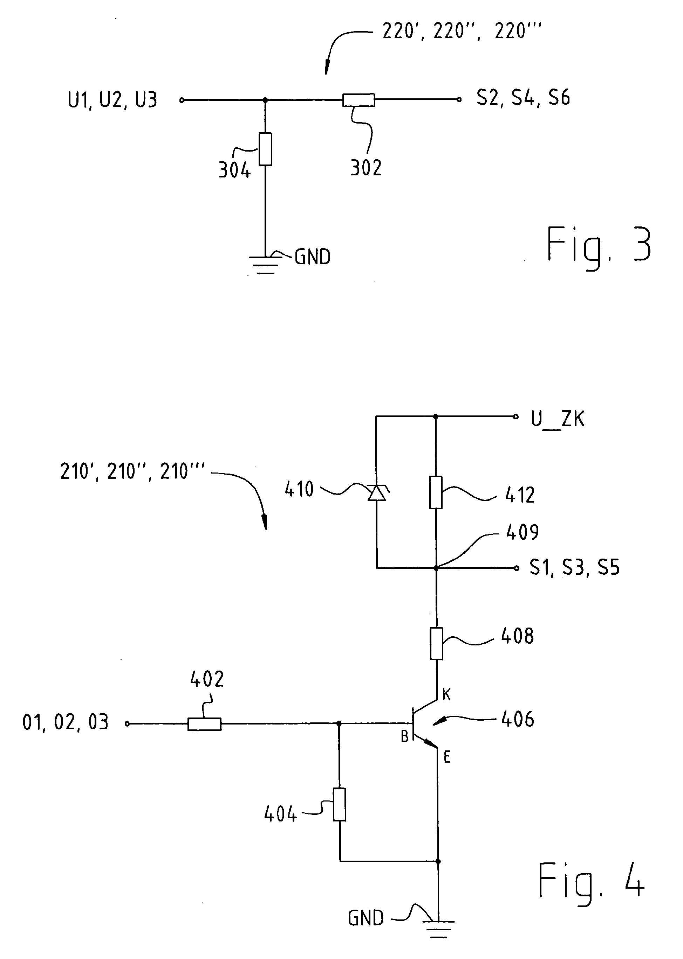

Bevorzugt werden die oberen und unteren Halbleiterschalter 212, 214, 216, 222, 224 und 226 mit MOSFET oder IGBT (Isolated Gate Bipolar Transistor) realisiert, welche integrierte Freilaufdioden haben, deren Durchlassspannung generell zwischen 0,7 und 1,4 V liegt. In Fig. 2 sind die oberen Halbleiterschalter 212, 214 und 216 als P-Kanal MOSFETs und die unteren Halbleiterschalter 222, 224 und 226 als N-Kanal MOSFETs ausgeführt, wobei die Anschlüsse U, V und W jeweils mit den Drains D der zugeordneten oberen und unteren MOSFETs verbunden sind. Die Gates der oberen und unteren MOSFETs sind über Signalaufbereitungseinrichtungen mit einer Ausgabeeinrichtung 234 (OUTPUT) der Steuerung 130 verbunden, welche mit der Kommutierungssteuerung 132 der Steuerung 130 verbunden ist, um die von der Kommutierungssteuerung 132 erzeugten Kommutierungssignale der Endstufe 122 zuzuführen. Hierzu ist jedes Gate der oberen MOSFETs 212, 214 und 216 über eine dem MOSFET zugeordnete Signalaufbereitungseinrichtung 210', 210" bzw. 210''' mit einem entsprechenden Ausgang 01, 02 bzw. 03 der Ausgabeeinrichtung 234 verbunden. Die Signalaufbereitungseinrichtungen 210', 210" und 210''' werden bei FIG. 4 beschrieben. Jedes Gate eines der unteren MOSFETs 222, 224, 226 ist über eine dem MOSFET zugeordnete Signalaufbereitungseinrichtung 220', 220" bzw. 220''' mit einem zugeordneten Ausgang U1, U2 bzw. U3 der Ausgabeeinrichtung 234 verbunden. Die Signalaufbereitungseinrichtungen 220', 220" und 220''' werden bei FIG. 3 weiter beschrieben. Die Source-Anschlüsse der oberen MOSFETs 212, 214 und 216 sind über einen Knotenpunkt 211 mit einer Versorgungsspannung UZK verbunden. Die Source-Anschlüsse der unteren MOSFETs 222, 224 und 226 sind über einen Fußknotenpunkt 221 miteinander verbunden. Letzterer ist über einen Fußpunktwiderstand 242 mit Masse (GND) verbunden. Darüber hinaus sind Fußknotenpunkt 221 und Fußpunktwiderstand 242 über einen Verstärker 244 mit der Steuerung 130 verbunden. Der Fußpunktwiderstand 242 und der Verstärker 244 bilden das Strommessglied 150.

Die Steuerung 130, welche bevorzugt als Mikroprozessor oder Mikrocontroller ausgebildet ist, ist über eine Eingabeeinrichtung 236 (INPUT) mit dem Rotorstellungssensor 140 verbunden, welcher beispielhaft durch drei Hallsensoren 252, 254 und 256 realisiert ist. Wie Fig. 2 zeigt, ist der Hallsensor 252 mit einem Eingang H1 der Eingabeeinrichtung 236 verbunden. Der Hallsensor 254 ist mit einem Eingang H2 der Eingabeeinrichtung 236 verbunden und um 60° el. versetzt zum Hallsensor 252 angeordnet. Der Hallsensor 256 ist mit einem Eingang H3 der Eingabeeinrichtung 236 verbunden und um 60° el. versetzt zum Hallsensor 254 bzw. um 120° el. versetzt zum Hallsensor 252 angeordnet.

Die Eingabeeinrichtung 236 ist mit der Kommutierungssteuerung 132 und mit einem Drehzahlregler 238 (N-RGL) verbunden. Letzterer ist ebenfalls mit der Kommutierungssteuerung 132 verbunden.

Im Betrieb der Vorrichtung 200 wird die Versorgungsspannung UZK zur Bestromung des Stators 201 an die Endstufe 122 angelegt. Die Spannung UZK ist vorzugsweise eine im Wesentlichen konstante Gleichspannung, welche von einem Netzgerät oder einer Batterie geliefert wird und bewirkt eine Drehung des Rotors 208. Die hierbei entstehenden Hallsignale der Hallsensoren 252, 254, 256 werden dem Drehzahlregler 238 zugeführt, welcher aus den Hallsignalen einen Drehzahl-Istwert des Rotors 208 bestimmt. Der Drehzahlregler 238 erzeugt unter Verwendung des Drehzahl-Istwerts eine Drehzahlregelgröße, welche der Kommutierungssteuerung 132 zugeführt wird.

Die Kommutierungssteuerung 132 erzeugt in Abhängigkeit von der Drehzahlregelgröße und den Rotorstellungssignalen H1, H2, H3 Kommutierungssignale zur Ansteuerung der Endstufe 122, welche über die Ausgabeeinrichtung 234 den Gates der oberen und unteren MOSFETs zugeführt werden. Hierbei können den Kommutierungssignalen entsprechende PWM-(Pulsweitenmodulations-) Signale zur Ansteuerung der MOSFETs überlagert werden, so dass unter Verwendung dieser MOSFETs die durch die Statorstränge 202, 204 und 206 fließenden Ströme gesteuert werden, um ein sich drehendes Magnetfeld zum Antrieb des Rotors 208 zu erzeugen. Die Motorströme werden z.B. so kommutiert, dass sich der Rotor 208 mit einer vorgegebenen Solldrehzahl (n_s) dreht. Zur Kommutierung der Motorströme werden die oberen und unteren MOSFETs je nach Bedarf durch entsprechende Kommutierungssignale, bzw. überlagerte PWM-Signale, ein- oder ausgeschaltet, wodurch die den MOSFETs zugeordneten Statorstränge 202, 204 und 206 ebenfalls entsprechend an- oder abgeschaltet werden.

Die Steuerung 130 führt zu einem vorgegebenen Zeitpunkt eine Bestimmung des temperaturabhängigen Motorparameters aus. Hierzu schaltet sie zunächst die Endstufe 122 aus, damit der Stator 201 in einen stromlosen Zustand übergeht, um die Bestimmung des temperaturabhängigen Motorparameters zu ermöglichen. Hierbei werden bevorzugt alle oberen und unteren MOSFETs 212, 214, 216, 222, 224 und 226 nichtleitend geschaltet, zumindest jedoch die oberen MOSFETs 212, 214 und 216. Da somit kein Strom mehr in die Statorstränge 202, 204 und 206 fließen kann, klingt der Motorstrom im Stator 201 ab, wobei der Zeitpunkt des Übergangs in den stromlosen Zustand durch eine Strommessung am Fußpunktwiderstand 242 bestimmt werden kann.

Am Fußpunktwiderstand 242, d.h. an dem Knotenpunkt 221, wird hierfür eine Spannung abgegriffen, welche vom Motorstrom nach Ausschalten der Endstufe 122 abhängig ist und durch die Verstärkungsschaltung 244 zu einem Motorstrom-Istwert I verstärkt wird, welcher zu der Steuerung 130 zurückgekoppelt wird. Wenn dieser Strom I abgeklungen ist, ist der Stators 201 stromlos. Alternativ zu einer Messung am Widerstand 242 könnte der Strom auch unmittelbar an den Statorsträngen 202, 204, 206 gemessen werden, beispielsweise unter Verwendung von geeigneten LEM-Modulen. Alternativ kann nach dem Ausschalten der Endstufe 122 eine vorgegebene Zeitdauer gewartet werden, um den Motorstrom abklingen zu lassen.

Um in der Messperiode die Messung des die induzierte Spannung charakterisierenden Werts über die Signalaufbereitungseinrichtungen 230', 230" und 230''' zu ermöglichen, wird jeweils einer der unteren MOSFETs 222, 224 und 226 der Endstufe 122 in Abhängigkeit von der Stellung des Rotors 208, welche mittels der Hallsensoren 252, 254 und 256 bestimmt wird, eingeschaltet, wie bei Fig. 6 weiter beschrieben wird. Der Steuerung 130 wird also in der Messperiode mindestens ein Spannungswert $U_{IND}$ für die in den Statorsträngen 202, 204 und 206 induzierte Spannung von den Signalaufbereitungseinrichtungen 230', 230" und 230''' über den A/D-Wandler 232 zugeführt.

Alternativ kann in der Messperiode eine Vielzahl von Spannungsmessungen ausgeführt werden, so dass der Steuerung 130 eine Vielzahl von Spannungswerten zugeführt wird. In diesem Fall bestimmt die Steuerung 130 den Spannungswert $U_{IND}$ durch Mittelung über alle ihr in der Messperiode zugeführten Spannungswerte.

Der die Drehzahl des Motors charakterisierende Wert w wird ebenfalls durch die Steuerung 130 bestimmt. Hierzu wird die Zeit zwischen zwei Wechseln des Rotorstellungssignals gemessen. Die Messung kann während der Messperiode für die induzierte Spannung oder auch davor oder danach erfolgen, sofern die Drehzahl einigermaßen konstant ist. Es wird jedoch darauf hingewiesen, dass die Verwendung von Hallsensoren lediglich eine mögliche Ausführung zur Bestimmung der Rotorstellung ist, und dass stattdessen verschiedene andere Messverfahren verwendet werden können, z.B. eine Messung mittels Sinus- und Cosinus-Geber bzw. Absolutwertgeber, oder eine kontaktlose Messung mittels Gegen-EMK oder Induktivitätsmessung.

Bei einem Motor mit einer Drehzahlregelung und folglich einem Drehzahl-Sollwert n_s kann für den die Drehzahl charakterisierenden Wert auch der Drehzahl-Sollwert verwendet werden. Die Abweichung der Drehzahl vom Drehzahl-Sollwert ist hierbei abhängig von der Dauer der Messperiode, wobei die Drehzahl umso weniger abfällt, je kürzer die Dauer der Messperiode gewählt wird. Allerdings kann eine längere Messperiodendauer wünschenswert sein, um die Messgenauigkeit zu vergrößern.

Aus dem mindestens einen Spannungswert $U_{IND}$ und dem Drehzahlwert $\omega$ bestimmt die Steuerung 130 den temperaturabhängigen Motorparameter. Gemäß einer bevorzugten Ausführungsform der vorliegenden Erfindung ist der temperaturabhängige Motorparameter die Motorkonstante ke, welche gemäß der Gleichung

$$k_e = U_{IND}/\omega \qquad \qquad ... (1)$$

aus dem mindestens einen Spannungswert $U_{IND}$ und dem Drehzahlwert omega ($\omega$) berechnet wird. Die Motorkonstante ke ermöglicht einen direkten Rückschluss auf die Magnettemperatur des ECM 120. Beispielsweise kann die Motorkonstante ke für einen ECM 120 bestimmter Bauart bei steigender Magnettemperatur um 0,2 % pro °C abnehmen. Wenn ein Nennwert keNENN für die Motorkonstante ke bei einer Basismagnettemperatur von beispielsweise +25° C für einen gegebenen Motor bekannt ist, kann also aus einer ermittelten Motorkonstanten ke unmittelbar auf eine momentane Magnettemperatur des betreffenden Motors geschlossen werden.

Die Motorkonstante ke wird bevorzugt verwendet, um die Kommutierungssignale der Kommutierungssteuerung 132, welche zur Ansteuerung der Endstufe 122 dienen, in Abhängigkeit von der momentanen Magnettemperatur derart zu beeinflussen, dass eine verbesserte Drehmomentregelung des ECM 120 erzielt wird, mit der Drehmomentschwankungen aufgrund von Änderungen der Magnettemperatur kompensiert werden können. Beispielsweise kann der Drehzahlregler 238 einen Korrekturfaktor Cf aus der Motorkonstanten ke und dem Nennwert keNENN der Motorkonstanten gemäß der Gleichung

$$C_f = k_e/k_{eNENN} \qquad \qquad ... (2)$$

bestimmen, welcher zur Korrektur des Motorstroms abhängig von der Magnettemperatur des ECM 120 geeignet ist. Durch die Korrektur des Motorstroms abhängig von der Magnettemperatur des ECM 120 wird dessen Drehmoment abhängig von der Magnettemperatur zur Kompensation von Temperaturschwankungen geregelt.

Diese Drehmomentregelung kann dahingehend verbessert werden, dass für die Motorkonstante ke eines gegebenen Motors bei der Basismagnettemperatur nicht der tatsächliche Wert der Motorkonstanten ke verwendet wird, sondern ein entsprechender Sollwert, welcher für eine Baureihe derartiger Motoren vom Hersteller vorgegeben wird.

So kann man Serienschwankungen innerhalb der betreffenden Baureihe durch einen Rückbezug auf den vorgegebenen Sollwert im Rahmen der erfindungsgemäßen temperaturabhängigen Drehmomentregelung ebenfalls ausgleichen.

Ein bevorzugter Anwendungsfall sind Applikationen, bei denen ein maximales Drehmoment nicht überschritten werden darf. Das Drehmoment ist abhängig von Motorstrom und Temperatur. Durch die Messung der Temperatur mittels der vorliegenden Anordnung kann für die jeweilige Temperatur ein dem maximalen Drehmoment entsprechender Maximalstrom I bestimmt werden, der nicht überschritten werden darf. Bei höheren Temperaturen kann also ein höherer Maximalstrom ermöglicht werden, ohne dass das maximale Drehmoment überschritten wird. Dies führt zu Motoren, die auch bei höheren Temperaturen gut reagieren.

**Fig. 3** zeigt ein vereinfachtes Schaltbild einer beispielhaften Schaltung, mit welcher jede der Signalaufbereitungseinrichtungen 220', 220" und 220''' der Fig. 2 realisiert wird. Jeder der Ausgänge U1, U2 und U3 der Schaltung 200 ist einerseits über einen Widerstand 304 mit Masse (GND) und andererseits über einen Widerstand 302 mit dem Gate des zugeordneten unteren MOSFETs S2, S4 oder S6 verbunden. Der Widerstand 302 dient als Strombegrenzungswiderstand, um das zugeordnete Gate vor Überlastung zu schützen, während der Widerstand 304 dazu dient, ein entsprechendes Schalt- bzw. Abschaltpotential an dem zugeordneten Gate zu erzeugen.

**Fig. 4** zeigt ein vereinfachtes Schaltbild einer Schaltung, mit welcher jede der Signalaufbereitungseinrichtungen 210', 210" und 210''' der Fig. 2 gemäß einer bevorzugten Ausführungsform der Erfindung realisiert wird. Jeder der Ausgänge O1, 02 und 03 der Schaltung 200 der Fig. 2 ist über einen Widerstand 402 mit der Basis eines NPN-Transistors 406 verbunden, dessen Emitter mit Masse (GND) verbunden ist. Auch die Basis des Transistors 406 ist über einen Widerstand 404 mit Masse verbunden. Sein Kollektor ist über einen Widerstand 408 mit einem Knotenpunkt 409 verbunden, der über eine Parallelschaltung einer Zenerdiode 410 mit einem Widerstand 412 mit der Versorgungsspannung UZK verbunden ist. Der Knotenpunkt 409 ist ferner mit dem Gate des zugeordneten oberen MOSFETs S1, S3 oder S5 verbunden.

Die Signalaufbereitungseinrichtungen 210', 210" und 210''' dienen zur Potentialwandlung, um das Potential der Versorgungsspannung UZK und das Potential an dem entsprechenden Ausgang O1 02 oder 03 in ein Schaltpotential zum Leitend- bzw. Nicht-Leitend-Schalten des zugeordneten oberen P-Kanal MOSFETs S1, S3 oder S5 umzuwandeln. Hierbei wird der Transistor 406 leitend geschaltet, wenn das Signal an dem entsprechenden Ausgang O1, 02 oder 03 "hoch" ist, d.h. wenn das Potential an 01, 02 oder 03 beispielsweise einen Pegel von +5 V hat. Bei einem Leitend-Schalten des Transistors 406 bilden die Widerstände 408 und 412 einen Spannungsteiler, so dass an dem Knotenpunkt 409 das Schaltpotential für den jeweiligen oberen MOSFET S1, S3 oder S5 gebildet wird. Bei einem Nicht-Leitend-Schalten des Transistors 406 entsteht an dem Knotenpunkt 409 das Potential der Versorgungsspannung UZK, welches eine Sperrung des jeweiligen oberen MOSFETs S1, S3 oder S5 bewirkt.

**Fig. 5** zeigt ein vereinfachtes Schaltbild einer Schaltung, mit welcher jede der Signalaufbereitungseinrichtungen 230', 230" und 230''' der Fig. 2 bevorzugt realisiert wird. Jeder Anschluss U, V, W der Stränge 202, 204 und 206 der Schaltung 200 ist über einen Widerstand 502 mit einem entsprechenden Anschluss des A/D-Wandlers 232 verbunden. Der entsprechende Anschluss des A/D-Wandlers ist darüber hinaus über eine Parallelschaltung eines Kondensators 504 und eines Widerstands 506 mit Masse (GND) verbunden. Hierbei dient der Widerstand 502 als Strombegrenzungswiderstand, um den jeweiligen Anschluss des A/D-Wandlers vor Überlastung zu schützen. Die Parallelschaltung des Kondensators 504 mit dem Widerstand 506 bildet ein RC-Filter zur Glättung des Messsignals (Tiefpass).

**Fig. 6** zeigt ein vereinfachtes Schaltbild einer Schaltung 600, welche einen Schaltzustand eines Teils der Endstufe 122 (Fig. 2) bei einer Messung der in einem der Statorstränge 202, 204, 206 induzierten Spannung darstellt. Die induzierte Spannung wird jeweils an einem ausgewählten Statorstrang in Abhängigkeit von einer momentanen Stellung des Rotors 208 gemessen, wobei der zu verwendende Statorstrang aus einer Tabelle bestimmt wird, wie sie nachfolgend beispielhaft dargestellt ist.

**Tabelle I**

| | H3 | H2 | H1 | W | V | U |
|---|---|---|---|---|---|---|
| 000: | | | | | | |
| 001: | 0 | 0 | 1 | M | - | E |
| 002: | 0 | 1 | 1 | M | E | - |
| 003: | 0 | 1 | 0 | - | E | M |
| 004: | 1 | 1 | 0 | E | - | M |
| 005: | 1 | 0 | 0 | E | M | - |
| 006: | 1 | 0 | 1 | - | M | E |

Tabelle I beschreibt in den Spalten 001 bis 003 mögliche Kombinationen der Hallsignale H3, H2, H1, welche von den Hallsensoren 252, 254 und 256 den Eingängen H1, H2 und H3 der Eingabeeinrichtung 236 (Fig. 2) zugeführt werden. Jede Kombination stellt eine andere Rotorstellung des Rotors 208 dar. Z.B. beschreibt die Kombination in Zeile 001 eine Rotorstellung, bei der H1 = 1, H2 = 0 und H3 = 0 ist. Die letzten drei Spalten beschreiben, an welchem Wicklungsanschluss U, V oder W der entsprechende untere MOSFET 222, 224 oder 226 eingeschaltet wird (E), wodurch dieser Wicklungsanschluss mit dem Anschluss 221 verbunden wird, und an welchem anderen Wicklungsanschluss W gleichzeitig die induzierte Spannung gemessen wird (M). Z.B. wird bei der in Zeile 001 beschriebenen Rotorstellung der untere MOSFET 222 (am Wicklungsanschluss U) eingeschaltet, und die induzierte Spannung wird an dem Wicklungsanschluss W, d.h. in dem Statorstrang 206, gemessen. [Diese Tabelle gilt für eine vorgegebene Drehrichtung. Bei der entgegengesetzten Drehrichtung sind M und E vertauscht.]

In Fig. 6 sind nur die erste und zweite Halbleiter-Serienschaltung der Endstufe 122 (Fig. 2) mit den MOSFETs 212, 214, 222 und 224 und den Wicklungsanschlüssen U und V abgebildet, wobei die MOSFETs zur Illustration als (Halbleiter-) Schalter 612, 614, 622 und 624 dargestellt sind. Parallel zum Strang 202 ist hierbei die Serienschaltung der Stränge 204, 206 geschaltet, deren Verbindungspunkt W in dieser Rotorstellung weder mit dem Anschluss 221 noch mit $U_{ZK}$ verbunden ist, so dass in dieser Serienschaltung durch den Rotor 208 die gleiche Spannung $U_{IND}$ induziert wird wie im Strang 202.

Zur Verdeutlichung ist in Fig. 6 ein Fall dargestellt, in dem die Rotorstellung des Rotors 208 derart ist, dass die Kombination von Hallsignalen gemäß Zeile 006 der Tabelle I erzeugt wird, d.h. den Eingängen H1 und H3 werden die Hallsignale H1=1 und H3=1 zugeführt. Dementsprechend wird gemäß Zeile 006 der untere Halbleiterschalter 622, welcher mit dem Wicklungsanschluss U verbunden ist, leitend geschaltet. An dem Wicklungsanschluss V, welcher über den Statorstrang 202 mit dem Wicklungsanschluss U verbunden ist, wird gemäß Zeile 006 über die entsprechende Signalaufbereitungseinrichtung 230'' des Spannungsmessglieds 110 die in dem Statorstrang 202 induzierte Spannung gegenüber Masse (GND) gemessen.

Wenn bei normalem Motorbetrieb die Rotorstellungssignale gemäß Zeile 006 der Tabelle I vorliegen, werden die beiden Halbleiterschalter 614 und 622 eingeschaltet, um eine Bestromung des Statorstrangs 202 und der in Serie geschalteten Statorstränge 204, 206 zu bewirken. Dagegen wird bei der Messung der induzierten Spannung der Halbleiterschalter 614 nichtleitend geschaltet, um eine Messung der induzierten Spannung zu ermöglichen.

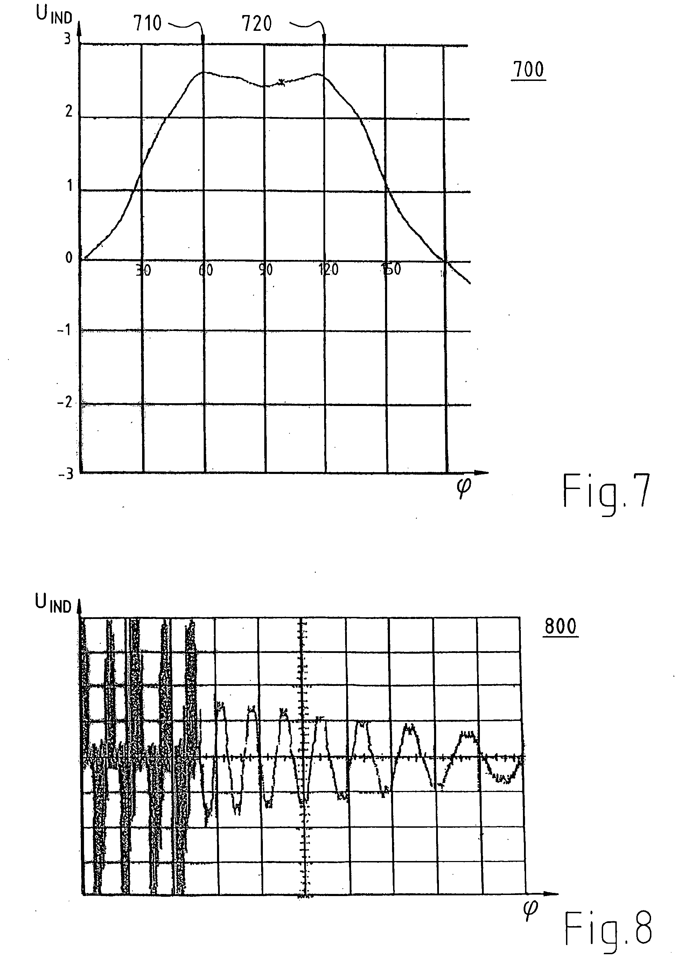

**Fig. 7** zeigt eine schematische Darstellung 700 eines beispielhaften Verlaufs der induzierten Spannung $U_{IND}$, die mit der Schaltung gemäß Fig. 6 in dem Statorstrang 202 gemessen wird. In Fig. 7 ist die induzierte Spannung $U_{IND}$ abhängig von einem Drehwinkel phi des Rotors dargestellt, welcher die Rotorstellung repräsentiert und hier über einen Drehwinkelbereich von 180° el. dargestellt ist.

Bei einem Drehwinkel 710 von phi = 60° el. findet ein erster Wechsel des Rotorstellungssignals (hiernach als Hallwechsel bezeichnet) statt. Bei einem Drehwinkel 720 von phi = 120° el. findet ein zweiter Hallwechsel statt. Bei dem ersten Hallwechsel 710 ist die exakte Position bzw. Rotorstellung des Rotors bekannt, und die Messperiode zur Messung der induzierten Spannung $U_{IND}$ beginnt. Beim zweiten Hallwechsel 720 ist die exakte Position bzw. Rotorstellung des Rotors ebenfalls bekannt, und bevorzugt endet die Messperiode zur Messung der induzierten Spannung $U_{IND}$, welche in dieser Messperiode mindestens einmal gemessen wird, spätestens hier. Während der Messperiode zwischen den Drehstellungen 710 und 720 entspricht das Potential, das an dem zur Messung verwendeten Wicklungsanschluss gemessen wird, etwa dem Wert der maximalen induzierten Spannung. Vor dem Punkt 710 und nach dem Punkt 720 ist eine Messung an dem Wicklungsanschluss dagegen nicht bzw. kaum möglich. Sofern vor dem Punkt 710 bzw. nach dem Punkt 720 gemessen werden soll, muss dies über einen anderen Wicklungsanschluss gemäß Tabelle I erfolgen.

**Fig. 8** zeigt eine schematische Darstellung 800 eines beispielhaften Verlaufs der induzierten Spannung $U_{IND}$, die mit der Schaltung gemäß Fig. 6 an dem Wicklungsanschluss V gemessen wird. In Fig. 8 ist die induzierte Spannung $U_{IND}$ abhängig von einem Drehwinkel phi des Rotors dargestellt, welcher die Rotorstellung repräsentiert und beispielhaft eine Vielzahl kompletter mechanischer Umdrehungen des Rotors umfasst.

Wie Fig. 8 zeigt, klingt die induzierte Spannung $U_{IND}$ ab, wenn die Messperiode zu lang ist, so dass die Messgenauigkeit abnimmt. Dieses Abklingen wird dadurch bewirkt, dass der ECM während der gesamten Messperiode nicht bestromt wird, so dass seine Drehzahl und ebenso die induzierte Spannung $U_{IND}$ sinken bzw. abklingen. Um dies zu vermeiden, werden vorzugsweise kurze Messperioden von beispielsweise 300 µs oder aber maximal 60° el. (vgl. Fig. 7) gewählt. Kurze Messperioden haben auch den Vorteil, dass die Abgabeleistung des ECM durch die Messung nur unwesentlich eingeschränkt wird.

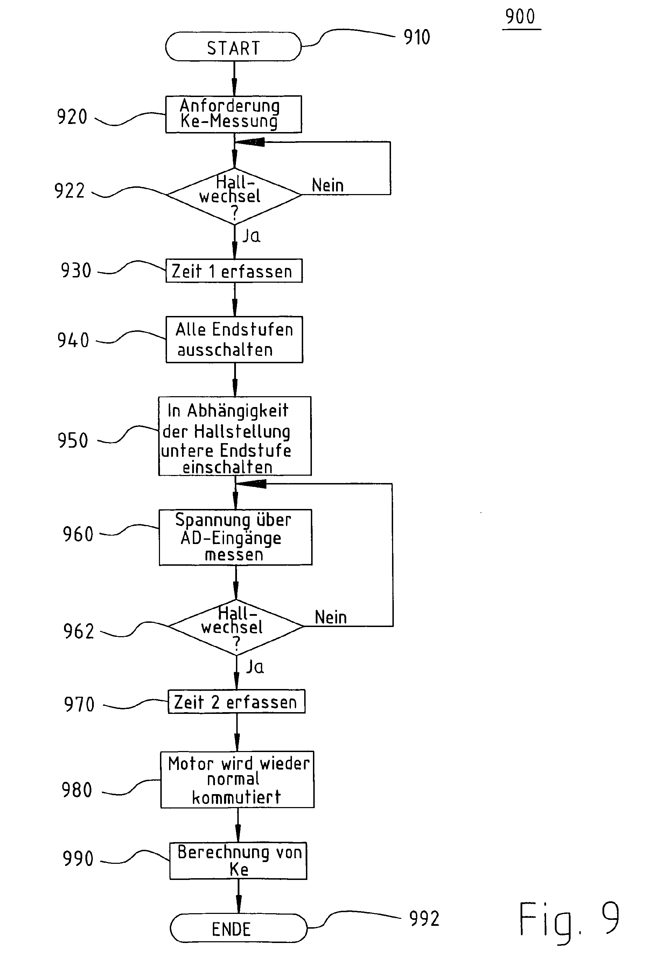

**Fig. 9** zeigt ein bevorzugtes Flussdiagramm eines Verfahrens 900 zur Bestimmung eines temperaturabhängigen Motorparameters, welches mit der Schaltung 200 der Fig. 2 durchgeführt wird. Das Verfahren 900 wird zur Verdeutlichung unter Bezugnahme auf eine Bestimmung der Motorkonstanten ke mittels dieser Schaltung 200 beschrieben und beginnt mit Schritt 910.

In Schritt 920 wird zunächst eine ke-Bestimmung angefordert. Dies kann beispielsweise zu einem vorgegebenen Zeitpunkt durch die Steuerung 130 erfolgen, welche die Endstufe 122 ausschaltet, damit der Stator 201 in den stromlosen Zustand übergeht, um die Bestimmung von ke zu ermöglichen. Die Anforderung zur ke-Bestimmung wird in vorgegebenen zeitlichen Abständen wiederholt, welche abhängig von einer möglichen Magnettemperaturänderung festgelegt werden. Derartige Anforderungen können an Zeitpunkten erfolgen, in denen keinen besonderen Drehmomentanforderungen vorliegen, beispielsweise im Rückwärtslauf des ECM, oder beim Motorstart.

In Schritt 922 wird auf einen Hallwechsel der Hallsensoren 252, 254 bzw. 256 gewartet, da bei einem Hallwechsel die exakte Stellung des Rotors 208 bekannt ist und somit vorzugsweise die Messperiode zur Messung einer induzierten Spannung $U_{IND}$ eingeleitet werden kann. Wenn ein entsprechender erster Hallwechsel auftritt, fährt das Verfahren 900 in Schritt 930 fort. Im Schritt 930 wird der Zeitpunkt des Auftretens des ersten Hallwechsels bestimmt.

Im Schritt 940 wird die Endstufe 122 ausgeschaltet, d.h. alle oberen und unteren MOSFETs 212, 214, 216, 222, 224 und 226 werden nichtleitend geschaltet, damit kein antreibender Strom mehr in die Statorstränge 202, 204 und 206 fließt. Nach dem Ausschalten der Endstufe 122 wird gewartet, bis der Motorstrom im Stator 201 abgeklungen ist, d.h. bis der Stator 201 stromlos geworden ist.

In Schritt 950 wird nach dem Erreichen des stromlosen Zustands einer der unteren MOSFETs 222, 224, 226 abhängig von der Stellung des Rotors 208 eingeschaltet, wie oben bei Fig. 6 beschrieben. In Schritt 960 wird der Spannungswert $U_{IND}$ für die in den Statorsträngen 202, 204, 206 induzierte Spannung von den Signalaufbereitungseinrichtungen 230', 230" und 230''' über den A/D-Wandler 232 der Steuerung 130 zugeführt.

In Schritt 962 wird auf einen zweiten Hallwechsel der Hallsensoren 252, 254 bzw. 256 gewartet, da hierbei wieder die exakte Stellung des Rotors 208 bekannt ist und somit die Messperiode zur Messung der induzierten Spannung $U_{IND}$ beendet werden kann. Wenn ein entsprechender zweiter Hallwechsel auftritt, fährt das Verfahren 900 in Schritt 970 fort. In Schritt 970 wird der Zeitpunkt des Auftretens des zweiten Hallwechsels bestimmt.

In Schritt 980 wird der Stator 201 wieder normal unter Verwendung der von der Kommutierungssteuerung 132 erzeugten Kommutierungssignale bestromt, um zum Normalbetrieb zurückzukehren.

In Schritt 990 wird die Motorkonstante ke bestimmt. Hierzu wird zunächst aus den bekannten Stellungen des Rotors 208 beim ersten und zweiten Hallwechsel, sowie dem gemessenen Zeitpunkt des ersten Hallwechsels sowie dem gemessenen Zeitpunkt des zweiten Hallwechsels der Drehzahlwert omega ($\omega$) bestimmt. Aus dem Spannungswert $U_{IND}$ und dem Drehzahlwert w bestimmt die Steuerung 130 dann die Motorkonstante ke wie oben beschrieben. Das Verfahren 900 endet dann im Schritt 992.

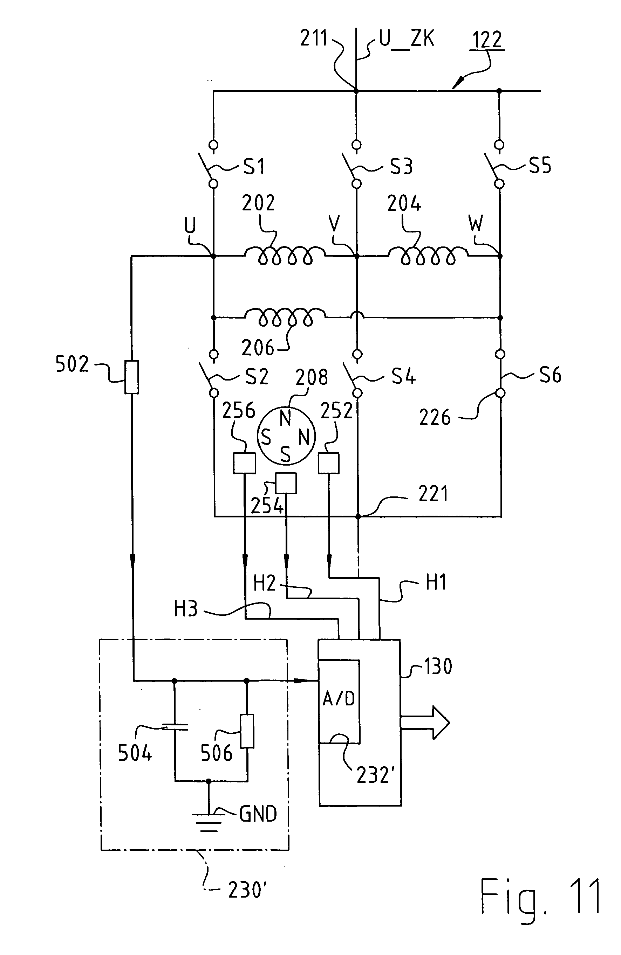

Eine Vereinfachung ist in Fig. 2 dadurch möglich, dass man für die Messung von UIND zwei der drei Messschaltungen 230', 230", 230''' weglässt, wie das in **Fig. 11** dargestellt ist, und dass man abwartet, bis die richtige Kombination von Hallsignalen für den Beginn einer Messung vorliegt.

Die Schaltung nach Fig. 11 geht davon aus, dass die induzierte Spannung am Anschluss U gemessen wird, während der Anschluss W bei der Messung über den Halbleiterschalter S6 mit dem Knotenpunkt 221 verbunden ist. Dies entspricht der Zeile 004 der Tabelle I, wobei H1 = 0, H2 = 1 und H3 = 1 ist.

Da nur bei Vorliegen dieser Bedingung gemessen wird, die bei einem vierpoligen Motor zweimal pro Rotorumdrehung vorliegt, genügen in Fig. 11 die Bauelemente 502, 504 und 506 sowie ein $\mu$C 130 mit nur einem A/D-Wandler 232'. Hierdurch wird also die Hardware vereinfacht, da zwei A/D-Wandler entfallen. Man kann deshalb einen billigeren $\mu$C verwenden.

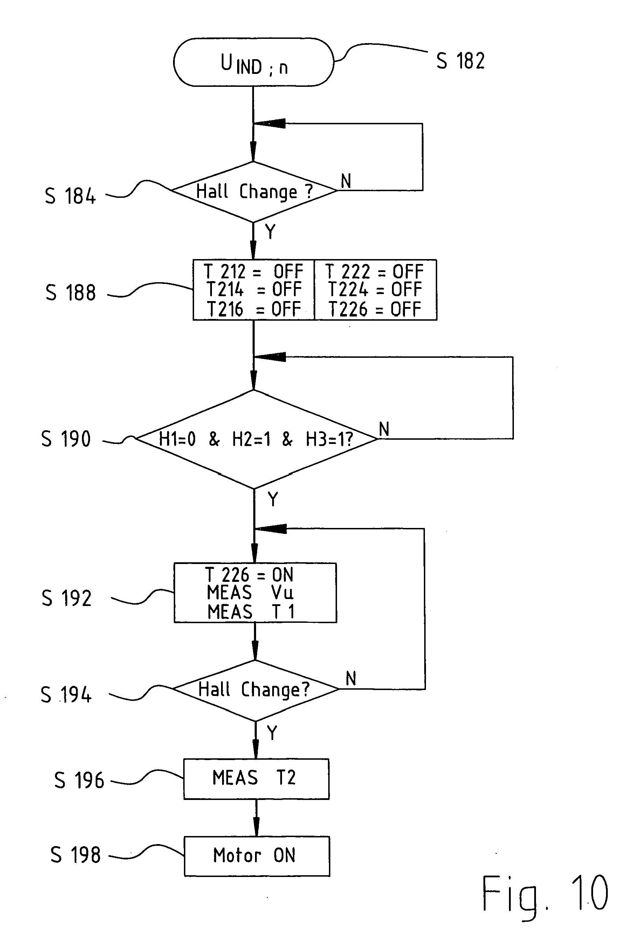

**Fig. 10** zeigt das zugehörige Flussdiagramm. Diese Routine beginnt im Schritt S182, wo eine Messung der induzierten Spannung $U_{IND}$ und ggf. auch der Drehzahl n angefordert wird. Dies kann z. B. alle 30 Minuten der Fall sein. Bei S184 wird die nächste Änderung eines der drei Hallsignale H1, H2, H3 abgewartet.

Im Schritt S188 wird die Endstufe 122 stromlos gemacht, indem alle sechs Halbleiterschalter 212, 214, 216, 222, 224, 226 nichtleitend gemacht werden.

Anschließend wird bei S190 abgewartet, bis die Hallsignalkombination gemäß Zeile 004 der Tabelle I vorliegt. Falls JA, wird gemäß S192 der Halbleiterschalter 226 eingeschaltet, wie das in Fig. 11 dargestellt ist, und die Messung der Spannung am Anschluss U wird bis zur nächsten Änderung der Hallsignale durchgeführt, also während 60° el, wie in Fig. 7 dargestellt, dort zwischen den Drehstellungen 710 und 720 des Rotors 208. Der Zeitpunkt T1 wird an der Drehstellung 710 gemessen, und der Zeitpunkt T2 an der Drehstellung 720, d. h. die Differenz (T2 - T1) entspricht einem Drehwinkel des Rotors 208 von 60° el. Daraus kann die Drehzahl des Rotors berechnet werden, oder man kann direkt mit der gemessenen Zeit (T2-T1) rechnen.

Wenn sich in S194 eines der drei Hallsignale ändert, wird die Messung abgeschlossen, der Zeitpunkt T2 wird in S196 gemessen, und in S198 wird der Motor 124 wieder eingeschaltet, d. h. es wird wieder normal kommutiert.

Da die Messung der induzierten Spannung typischerweise während weniger als einer Rotorumdrehung erfolgt; hat diese Messung keinen wesentlichen Einfluss auf die Drehzahl des Rotors 208, so dass für die Berechnung von $U_{IND}/\omega$ auch der Drehzahl-Sollwert eines Drehzahlreglers verwendet werden kann, sofern der ECM 124 mit geregelter Drehzahl läuft.

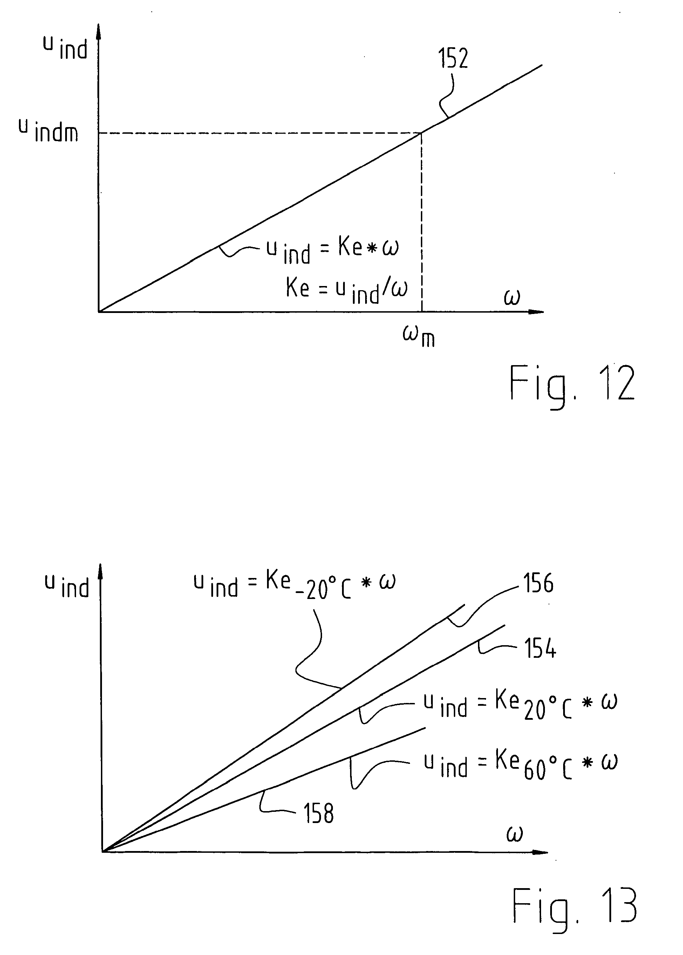

Wenn bei dem ECM 124 der permanentmagnetische Rotor 208 mechanisch angetrieben wird, induziert er in den Strängen 202, 204, 206 eine induzierte Spannung $U_{IND}$, deren Höhe direkt der Drehzahl $\omega$ proportional ist. Dies ist in **Fig. 12** dargestellt. Es gilt

$$U_{IND} = ke * \omega \qquad \qquad ... (3)$$

Dies ist die Gleichung der Geraden 152 in Fig. 12.

Kennt man also aus einer Messung ein Wertepaar $U_{INDm}$ und $omega_m$, so ergibt sich ke als

$$k_e = U_{INDm}/omega_m \qquad \ldots (4),$$

wie das in Fig. 10 dargestellt ist. Der Wert ke wird auch als die Motorkonstante bezeichnet.

Bei einer Serie von gleichen Motoren, also von Motoren derselben Baureihe, gibt es individuelle Abweichungen der Motorkonstante. Der Grund ist u.a., dass bei den Permanentmagneten der Rotoren Abweichungen in den magnetischen Eigenschaften vorliegen können.

Ferner ist die Motorkonstante auch von der Temperatur abhängig, d.h. sie nimmt mit steigender Temperatur ab. Dies ist in Fig. 11 dargestellt. Dort ist mit 154 die Kurve der induzierten Spannung bei 20° C dargestellt. Diese hat die Form

$$U_{IND} = k_{e20°\,C} * \omega \qquad \ldots (5)$$

Für die so genannte Kreisfrequenz $\omega$ gilt

$$\omega = n * 2\pi/60 \; (s_{-1}) \qquad \ldots (6)$$

Hierbei ist
n = Drehzahl in U/min.

**Beispiel 1**

Für n = 3000 U/min gilt

$$\omega = 3000*2\pi/60 = 314/s \qquad \ldots (7)$$

**Beispiel 2**

Bei einem ersten Motor wird bei 3000 U/min = 314/s eine induzierte Spannung von $U_{IND}$ = 5 V = 5000 mV gemessen.

Dann gilt

$$k_{e1} = 5000 \; mVs/314 = 15.9 \; mVs \qquad \ldots (8)$$

**Beispiel 3**

Bei einem zweiten Motor desselben Typs wird bei n = 3000 U/min und derselben Temperatur nur eine Spannung $U_{IND}$ = 4,8 V = 4800 mV gemessen.

Damit gilt

$$k_{e2} = 4800 \; mVs/314 = 15,3 \; mVs \qquad \ldots (9)$$

Daraus ergibt sich für den zweiten Motor gemäß Gleichung (2) ein Korrekturfaktor von

$$Cf = k_{e1}/k_{e2} = 15,9 \text{ mVs}/15,3 \text{ mVs} = 1,04 \qquad \dots (10)$$

Dies bedeutet, dass der Sollwert $I_s$ für die Begrenzung des Motorstroms beim zweiten Motor um 4 % erhöht werden muss, um dasselbe Drehmoment T zu erhalten wie beim ersten Motor.

Bei niedrigen Temperaturen ergibt sich eine höhere induzierte Spannung, weil die Magnetflussdichte des Rotormagneten 208 zunimmt, und man erhält folglich bei - 20° C eine Kurve 156. Bei 60° C erhält man eine niedrigere induzierte Spannung, deren Verlauf mit 158 bezeichnet ist.

Diese unterschiedlichen Werte von ke haben auch einen Einfluss auf das Drehmoment des Motors. Für dieses gilt

$$T = k_e * I_s \qquad \dots (11)$$

Hierbei ist
T = vom Motor erzeugtes Drehmoment beim Strom I
ke = augenblickliche Motorkonstante
ls = Sollwert für den Motorstrom.

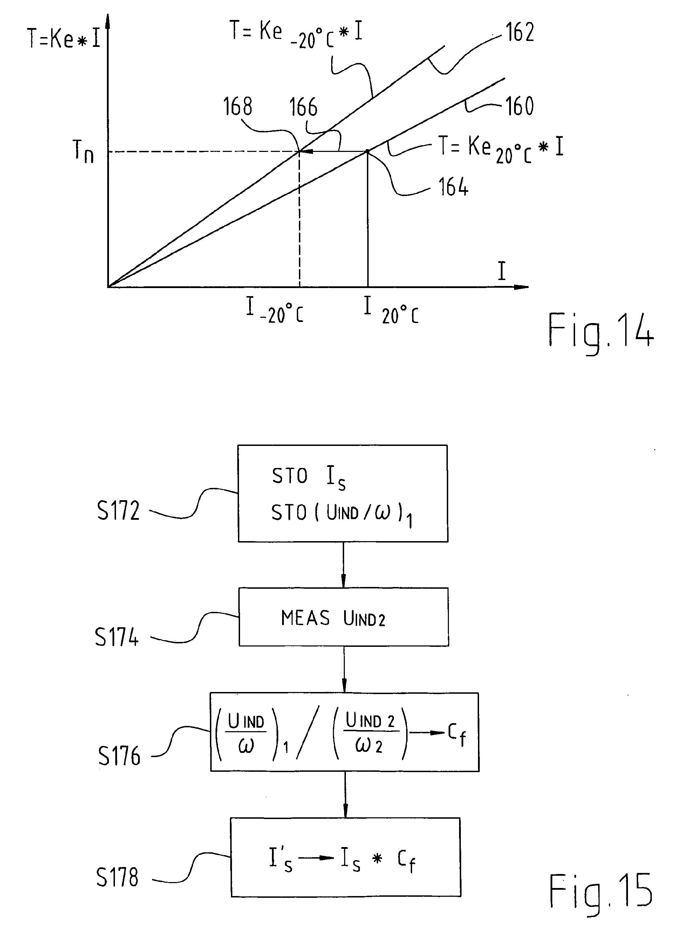

**Fig. 14** zeigt für einen vorgegebenen Motor eine Kennlinie 160, welche abhängig vom Strom I das Drehmoment eines bestimmten Motors bei 20° C zeigt. Fig. 14 zeigt auch für denselben Motor eine Kennlinie 162 für das Drehmoment T bei - 20° C, ebenfalls abhängig vom Strom I.

Aus diesen beiden Kurven erkennt man, dass der Motor bei einem bestimmten Strom bei - 20° C ein höheres Drehmoment erzeugt als bei +20° C.

Dies ist deshalb unerwünscht, weil solche Motoren z.B. dazu dienen, Ventile zu öffnen und zu schließen, wobei durch eine Strombegrenzung sicher gestellt werden muss, dass das vom ECM 124 erzeugte maximale Drehmoment nicht zu hoch wird, weil sonst auf die Dauer das Ventil beschädigt werden könnte. Dieses Problem besteht besonders dann, wenn solche Ventile in arktischen Gebieten verwendet werden. Dasselbe Problem tritt bei vielen Stellantrieben auf, die bei unterschiedlichen Temperaturen funktionsfähig sein müssen.

Aus diesem Grund muss also bei tiefen Temperaturen der Wert des Motorstroms, auf den dieser durch das Ansprechen einer Strombegrenzung begrenzt wird, reduziert werden, wie das in Fig. 14 dargestellt ist, d.h. man geht z.B. von einem Arbeitspunkt 164, der für 20° C gilt, über eine waagerechte Linie 166 zur Kurve 162 und bestimmt dort einen neuen Arbeitspunkt 168 für -20° C.

Analog geht man vor, wenn die Temperatur ansteigt, um in diesem Fall den Wert des Stromes $I_s$ in der Weise zu erhöhen, dass das Drehmoment T auch bei der höheren Temperatur eingehalten wird, wozu in diesem Fall der Stromwert $I_s$ erhöht werden muss. Der Strom kann dabei in einfacher Weise durch eine Pulsweitenmodulation erhöht werden.

**Fig. 15** zeigt das zugehörige Flussdiagramm. Bei S172 wird ein Stromwert $I_s$ gespeichert, der bei 20° C gemessen wurde. Bevorzugt ist dieser Strom $I_s$ der Mittelwert aus Messungen an verschiedenen Motoren, besonders bevorzugt der Wert, auf den eine Strombegrenzung eingestellt werden soll. Ferner wird bei S172 ein Wert $(U_{IND} / \omega)_1$ gespeichert, der den Durchschnitt von Messungen für eine größere Zahl von Motoren eines bestimmten Typs bei 20° C darstellt. Dies ist also ein optimierter Wert, sozusagen der Wert für einen optimalen durchschnittlichen Serienmotor.

Im Schritt S174 wird die induzierte Spannung $U_{IND2}$ beim aktuellen Motor gemessen, z.B. mittels der Schritte 940, 950 und 960 der Fig. 9.

Der Wert für die Drehzahl $\omega$ liegt in den meisten Fällen bereits vor, da heute viele ECMs eine Drehzahlregelung haben, weshalb man bei der Berechnung von $U_{IND2}/\omega_2$ den Sollwert $\omega_2$ des Drehzahlreglers verwenden kann. Alternativ kann man auch gleichzeitig mit der Messung der induzierten Spannung einen Wert für die Drehzahl messen, wie das bereits beschrieben wurde.

In S176 wird dann ein Korrekturfaktor Cf berechnet nach der Formel

$$Cf = (U_{IND}/\omega)_1 / (U_{IND2}/\omega_2) \qquad \dots (12)$$

Dieser Korrekturfaktor Cf berücksichtigt zweierlei:

    a) Die Abweichung des Motors von einem "Durchschnittsmotor", und

b) die Abweichung, welche dadurch verursacht wird, dass der Motor entweder kälter oder wärmer als z.B. 20° C ist.

Mit diesem Korrekturfaktor Cf wird gemäß S178 der in S172 gespeicherte Stromwert $I_s$ multipliziert, d.h. wenn der Motor kalt ist, wird der Stromwert $I_s$ reduziert, und wenn der Motor warm ist, wird der Stromwert $I_s$ erhöht, um in jedem Fall etwa das gleiche Drehmoment T zu erhalten, wie es ein Motor-Prototyp (mit optimalen Eigenschaften) bei der augenblicklichen Temperatur erzeugen würde.

Ein Motor nach der Erfindung erhält also durch diese elektronische Korrektur die gleichen Eigenschaften wie ein Motor mit vorgegebenen Eigenschaften aus derselben Serie, d.h. der Hersteller kann dem Käufer bestimmte Motoreigenschaften zusichern.

Naturgemäß sind im Rahmen der vorliegenden Erfindung für den Fachmann vielfache Abwandlungen und Modifikationen möglich.

**Patentansprüche**

1. Verfahren zur Bestimmung eines Motorparameters eines elektronisch kommutierten Motors während des Betriebs, welcher Motor einen Stator mit einer Mehrzahl von Statorsträngen und einen mit diesem Stator zusammenwirkenden permanentmagnetischen Rotor aufweist, welcher im Betrieb in den Statorsträngen Wechselspannungen ($U_{IND}$) induziert, wobei den Statorsträngen eine Endstufe zur Steuerung der Bestromung dieser Statorstränge zugeordnet ist,
   welches Verfahren folgende Schritte aufweist:

   Die Energiezufuhr zum Motor wird während des Betriebs unterbrochen, wobei sich der Rotor weiterhin dreht; während dieses im Wesentlichen stromlosen Zustands wird im Verlauf eines vorgegebenen Rotordrehungsbereichs für einen vorgegebenen Strang, an welchem in diesem vorgegebenen Rotordrehungsbereich die induzierte Spannung ein Maximum erreicht, eine Messschaltung gebildet;
   mit dieser Messschaltung wird die induzierte Spannung am vorgegebenen Strang mindestens im Bereich dieses vorgegebenen Rotordrehungsbereichs gemessen;
   die Energiezufuhr zum Motor wird wieder eingeschaltet.

2. Verfahren nach Anspruch 1, bei welchem die gemessene induzierte Spannung aus einem analogen Wert in einen digitalen Wert umgewandelt wird.

3. Verfahren nach Anspruch 1 oder 2, bei welchem etwa im Bereich des Zeitabschnitts, in welchem die induzierte Spannung gemessen wird, ein für die Drehzahl des Rotors kennzeichnender Wert erfasst wird.

4. Verfahren nach Anspruch 3, bei welchem im zeitlichen Zusammenhang mit der Erfassung der induzierten Spannung ($U_{IND}$) eine Zeitdauer (T2 -T1) erfasst wird, welche der Rotor für das Durchlaufen eines vorgegebenen Drehwinkels benötigt.

5. Verfahren nach Anspruch 3 oder 4, bei welchem zur Ermittlung eines temperaturabhängigen Motorparameters die ermittelte induzierte Spannung ($U_{IND}$) mit einem für die Drehzahl kennzeichnenden Wert rechnerisch verknüpft wird.

6. Verfahren nach Anspruch 5, bei welchem mit diesem temperaturabhängigen Motorparameter ein dem Motor zugeführter Strom-Sollwert abhängig von der Temperatur des Motors korrigiert wird, um im Wesentlichen unabhängig von der Temperatur des Motors einem vorgegebenen Strom-Sollwert ein vorgegebenes, vom Motor erzeugtes Drehmoment zuzuordnen.

7. Verfahren nach einem der vorhergehenden Ansprüche, für einen elektronisch kommutierten Motor mit drei Statorsträngen, wobei die Endstufe zur Ansteuerung der Statorstränge drei Serienschaltungen mit jeweils einem oberen und einem unteren Halbleiterschalter aufweist und die Anschlüsse (U, V, W) dieser Statorstränge jeweils an eine zugeordnete Serienschaltung angeschlossen sind,
   welches Verfahren folgende Schritte aufweist:

   Die Energiezufuhr zu den Statorsträngen wird unterbrochen, indem die Halbleiterschalter nichtleitend geschaltet werden;
   ein erster Halbleiterschalter einer ersten Serienschaltung, welche mit einem ersten Wicklungsanschluss (U, V, W) verbunden ist, wird leitend geschaltet;

an einem zweiten Wicklungsanschluss, welcher über einen Statorstrang mit dem ersten Wicklungsanschluss verbunden ist und dem eine zweite Serienschaltung zugeordnet ist, wird mit einem Spannungsmessglied die in dem betreffenden Statorstrang induzierte Spannung gemessen.

**8.** Verfahren nach Anspruch 7, bei welchem für die Bestimmung des temperaturabhängigen Motorparameters die erste und die zweite Serienschaltung in Abhängigkeit von der Rotorstellung bestimmt werden.

**9.** Verfahren nach Anspruch 7 oder 8, bei welchem die erste und zweite Serienschaltung mittels einer gespeicherten Tabelle ermittelt werden.

**10.** Verfahren nach einem der vorhergehenden Ansprüche, bei welchem die Endstufe nach Ablauf der Messperiode normal kommutiert wird, um die Energiezufuhr zu den Statorsträngen zu steuern.

**11.** Verfahren zur Bestimmung eines temperaturabhängigen Motorparameters eines elektronisch kommutierten Motors während des Betriebs, welcher Motor einen Stator mit einer Mehrzahl von Statorsträngen und einen mit diesem Stator zusammenwirkenden permanentmagnetischen Rotor aufweist, welcher Rotor im Betrieb in den Statorsträngen Spannungen ($U_{IND}$) induziert, wobei den Statorsträngen eine Endstufe zur Steuerung der Bestromung dieser Statorstränge zugeordnet ist, welches Verfahren folgende Schritte aufweist:

A) Bei laufendem Motor wird die Bestromung der Statorstränge unterbrochen;
B) es wird ein Wert ($U_{IND}$) ermittelt, welcher eine durch den permanentmagnetischen Rotor in einem Statorstrang induzierte Spannung charakterisiert;
C) ein die Drehzahl des Motors charakterisierender Wert (T2-T1; w) wird ermittelt;
D) unter Zuhilfenahme dieser Werte wird der temperaturabhängige Motorparameter ermittelt.

**12.** Verfahren nach Anspruch 11, bei welchem der temperaturabhängige Motorparameter zur Bestimmung der Magnettemperatur des elektronisch kommutierten Motors verwendet wird.

**13.** Verfahren nach Anspruch 11 oder 12, bei welchem der Motorstrom in Abhängigkeit von dem temperaturabhängigen Motorparameter beeinflusst wird.

**14.** Verfahren nach einem der Ansprüche 11 bis 13, bei welchem nach der Unterbrechung der Bestromung und vor Beginn der Messung eine vorgegebene Zeitdauer abgewartet wird, um den Motorstrom abklingen zu lassen.

**15.** Verfahren nach einem der Ansprüche 11 bis 14, bei welchem der Motorstrom nach der Unterbrechung der Bestromung gemessen wird, um den Zeitpunkt des Übergangs in den stromlosen Zustand zu bestimmen.

**16.** Verfahren nach einem der Ansprüche 11 bis 15, bei welchem eine Zeitdauer (T2-T1) gemessen wird, die der Rotor des Motors benötigt, um von einer ersten vorgegebenen Position zu einer zweiten vorgegebenen Position zu drehen.

**17.** Verfahren nach Anspruch 16, bei welchem dem Motor eine Rotorstellungssensoranordnung zur Erzeugung mindestens eines Rotorstellungssignals (H1, H2, H3) zugeordnet ist, und bei welchem erste und zweite Position über ein solches Rotorstellungssignal bestimmt werden.

**18.** Verfahren nach Anspruch 17, bei welchem erste und zweite Position bei einem Wechsel des Rotorstellungssignals bestimmt werden.

**19.** Verfahren nach Anspruch 17 oder 18, bei welchem die Messperiode für die Messung eines die induzierte Spannung charakterisierenden Werts zwischen einem ersten Wechsel eines Rotorstellungssignals und einem zweiten Wechsel eines Rotorstellungssignals liegt.

**20.** Verfahren nach einem der Ansprüche 11 bis 19, bei welchem während der Messperiode mehrfach gemessen wird, und der die induzierte Spannung charakterisierende Wert durch Mittelung bestimmt wird.

**21.** Verfahren nach einem der Ansprüche 11 bis 20, für einen elektronisch kommutierten Motor mit drei Statorsträngen, wobei die Endstufe zur Ansteuerung der Statorstränge drei Serienschaltungen mit jeweils einem oberen und einem unteren Halbleiterschalter aufweist und die Anschlüsse (U, V, W) dieser Statorstränge jeweils an eine zugeordnete Serienschaltung angeschlossen sind,

welches Verfahren folgende Schritte aufweist:

Die Energiezufuhr zu den Statorsträngen wird unterbrochen, indem die Halbleiterschalter nichtleitend geschaltet werden;
ein erster Halbleiterschalter einer ersten Serienschaltung, welche mit einem ersten Wicklungsanschluss (U, V, W) verbunden ist, wird leitend geschaltet;
an einem zweiten Wicklungsanschluss, welcher über einen Statorstrang mit dem ersten Wicklungsanschluss verbunden ist und dem eine zweite Serienschaltung zugeordnet ist, deren Halbleiterschalter nichtleitend gesteuert sind, wird mit einem Spannungsmessglied die in dem betreffenden Statorstrang induzierte Spannung gemessen.

**22.** Verfahren nach Anspruch 21, bei welchem für die Bestimmung des temperaturabhängigen Motorparameters die erste und die zweite Serienschaltung in Abhängigkeit von der Rotorstellung bestimmt werden.

**23.** Verfahren nach Anspruch 21 oder 22, bei welchem die erste und zweite Serienschaltung mittels einer gespeicherten Tabelle ermittelt werden.

**24.** Verfahren nach einem der Ansprüche 11 bis 23, bei welchem die Endstufe nach Ablauf der Messperiode normal kommutiert wird, um dem Motor erneut Energie zuzuführen.

**25.** Verfahren nach einem der Ansprüche 11 bis 24, bei welchem als temperaturabhängiger Motorparameter ein Wert verwendet wird, welcher **dadurch** ermittelt wird, dass ein Zahlenwert ermittelt wird, der einem Quotienten aus einem die induzierte Spannung bei der betreffenden Temperatur charakterisierenden Wert ($U_{IND}$) und einem die Drehzahl charakterisierenden Wert ($\omega$) entspricht.

**26.** Verfahren nach Anspruch 25, bei welchem ein Nennwert (keNENN) für die temperaturabhängige Motorkonstante (ke) bestimmt wird, welcher die temperaturabhängige Motorkonstante (ke) bei einer vorgegebenen Magnettemperatur beschreibt.

**27.** Verfahren nach Anspruch 26, bei welchem ein Korrekturfaktor (Cf) aus der temperaturabhängigen Motorkonstanten (ke) und dem Nennwert (keNENN) durch Division bestimmt wird, und mit diesem Korrekturfaktor der Motorstrom in Abhängigkeit von der Magnettemperatur des Motors korrigiert wird.

**28.** Verfahren nach einem der Ansprüche 11 bis 27, bei welchem die Drehzahl auf einen Sollwert geregelt wird, und als die Drehzahl charakterisierender Wert dieser Sollwert verwendet wird.

**29.** Verfahren nach einem der Ansprüche 11 bis 28, bei welchem aus dem temperaturabhängigen Motorparameter ein einem vorgegebenen Drehmoment entsprechender maximaler Motorstrom ermittelt wird, und bei welchem der Motorstrom auf diesen maximaler Motorstrom begrenzt wird, um das vom Motor erzeugte Drehmoment zu begrenzen.

**30.** Elektronisch kommutierter Motor, welcher einen Stator mit einer Mehrzahl von Statorsträngen und einen mit diesem Stator zusammenwirkenden permanentmagnetischen Rotor aufweist, welcher im Betrieb in den Statorsträngen Spannungen induziert, wobei den Statorsträngen eine Endstufe zur Beeinflussung ihrer Bestromung zugeordnet ist, und mit einer Steueranordnung, welche dazu ausgebildet ist, zwecks Bestimmung eines temperaturabhängigen Motorparameters folgende Schritte auszuführen:

A) Bei laufendem Motor wird die Bestromung der Statorstränge unterbrochen;
B) ein eine induzierte Spannung charakterisierender Wert ($U_{IND}$) wird ermittelt;
C) ein die Drehzahl des Motors charakterisierender Wert (T2-T1; w) wird ermittelt;
D) unter Zuhilfenahme dieser Werte wird der temperaturabhängige Motorparameter (ke) ermittelt.

**31.** Verfahren zum Betrieb eines elektronisch kommutierten Motors, welcher einen Stator mit einer Mehrzahl von Statorsträngen und einen mit diesem Stator zusammen wirkenden permanentmagnetischen Rotor aufweist, welcher Rotor im Betrieb in den Statorsträngen Spannungen ($U_{IND}$) induziert, wobei den Statorsträngen eine Endstufe zur Steuerung der Bestromung dieser Statorstränge zugeordnet ist, welches Verfahren folgende Schritte aufweist:

Dem Motor wird ein erster Quotient aus induzierter Spannung ($U_{IND}$) und einem die Drehzahl des Motors charakterisierenden Wert vorgegeben;

dem Motor wird, insbesondere für die Begrenzung des Motorstroms, ein Wert (Is) des Motorstroms vorgegeben, der bei Vorliegen dieses ersten Quotienten ein gewünschtes Drehmoment des Motors bewirkt;

der Motor wird kurzzeitig mindestens nahezu stromlos gemacht;

aus der in diesem mindestens nahezu stromlosen Zustand erfassten induzierten Spannung ($U_{IND}$), sowie einem Drehzahlwert, welcher die augenblickliche Drehzahl des Motors mindestens nahezu widerspiegelt, wird ein zweiter Quotient aus induzierter Spannung und Drehzahl ermittelt;

ausgehend vom Verhältnis zwischen erstem und zweitem Quotienten wird der vorgegebene Wert ($I_s$) des Stromes in einen korrigierten Wert ($I'_s$) umgewandelt, um bei einem vom ersten Quotienten abweichenden Wert des zweiten Quotienten zumindest angenähert das gewünschte Drehmoment zu erhalten.

Fig. 1

EP 1 727 268 A2

Fig. 2

220', 220'', 220'''

U1, U2, U3 ○————————●——————[ 302 ]————————○ S2, S4, S6

[ 304 ]

GND

# Fig. 3

210', 210'', 210'''

U_ZK

410

412 — 409

S1, S3, S5

408

402

01, 02, 03 ○——[ 402 ]——●————K— 406

B

E

404

GND

# Fig. 4

230', 230'', 230'''

U,V,W o————[ 502 ]————•————————————o A / D

504    506

GND

Fig. 5

o U_ZK

600

612 S1    614 S3

206    W    204    230''

U    V

202

622 S2    624 S4

221

Fig. 6

Fig.7

Fig.8

900

START — 910

920 — Anforderung
Ke-Messung

922 — Hallwechsel
? — Nein

Ja

930 — Zeit 1 erfassen

940 — Alle Endstufen
ausschalten

950 — In Abhängigkeit
der Hallstellung
untere Endstufe
einschalten

960 — Spannung über
AD-Eingänge
messen

962 — Hallwechsel
? — Nein

Ja

970 — Zeit 2 erfassen

980 — Motor wird wieder
normal
kommutiert

990 — Berechnung von
Ke

ENDE — 992

Fig. 9

Fig. 10

Fig. 11

$u_{ind}$

$u_{indm}$

152

$u_{ind} = Ke * \omega$

$Ke = u_{ind}/\omega$

$\omega$

$\omega_m$

## Fig. 12

$u_{ind}$

$u_{ind} = Ke_{-20°C} * \omega$

156

154

$u_{ind} = Ke_{20°C} * \omega$

$u_{ind} = Ke_{60°C} * \omega$

158

$\omega$

## Fig. 13

$T = Ke \cdot I$

$T = Ke_{-20°C} \cdot I$

162

168   166

160

$T_n$

$T = Ke_{20°C} \cdot I$

164

$I_{-20°C}$   $I_{20°C}$

I

Fig.14

S172 — STO $I_s$
STO $(U_{IND} / \omega)_1$

S174 — MEAS $U_{IND\,2}$

S176 — $\left( \dfrac{U_{IND}}{\omega} \right)_1 \Big/ \left( \dfrac{U_{IND\,2}}{\omega_2} \right) \rightarrow C_f$

S178 — $I'_s \rightarrow I_s \cdot C_f$

Fig.15

25